(19) **Europäisches Patentamt / European Patent Office / Office européen des brevets**

(11) **EP 2 672 751 B1**

(12) **FASCICULE DE BREVET EUROPEEN**

(45) Date de publication et mention
de la délivrance du brevet:
**16.07.2014 Bulletin 2014/29**

(51) Int Cl.:
***H04W 28/02*** (2009.01) ***H04L 29/08*** (2006.01)

(21) Numéro de dépôt: **13169991.0**

(22) Date de dépôt: **31.05.2013**

(54) **Procede de transmission dans un reseau multi-destinataires**

Übertragungsverfahren in einem Multi-Empfängernetz

Transmission method in a multicasting network

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.06.2012 FR 1201621**

(43) Date de publication de la demande:
**11.12.2013 Bulletin 2013/50**

(73) Titulaire: **Thales
92200 Neuilly Sur Seine (FR)**

(72) Inventeurs:
- **Khalife, Hicham
92622 Gennevilliers Cedex (FR)**
- **Leguay, Jérémie
92622 Gennevilliers Cedex (FR)**
- **Conan, Vania
92622 Gennevilliers Cedex (FR)**

(74) Mandataire: **Blot, Philippe Robert Emile
Cabinet Lavoix
2, place d'Estienne d'Orves
75441 Paris Cedex 09 (FR)**

(56) Documents cités:
**US-A1- 2009 141 631**

- **ELRAKABAWY ET AL: "TCP with gateway adaptive pacing for multihop wireless networks with Internet connectivity", COMPUTER NETWORKS, ELSEVIER SCIENCE PUBLISHERS B.V., AMSTERDAM, NL, vol. 52, no. 1, 20 novembre 2007 (2007-11-20), pages 180-198, XP022354899, ISSN: 1389-1286**
- **Christian Lochert: "A Survey on Congestion Control for MobileAd-Hoc Networks", Wireless Communications and Mobile Computing , 12 avril 2007 (2007-04-12), XP002690426, Extrait de l'Internet: URL:http://www.cn.uni-duesseldorf.de/publi cations/library/ Lochert2007b.pdf [extrait le 2013-01-16]**

**Description**

La présente invention concerne un procédé de transmission dans lequel :

- le même message est adressé depuis le noeud expéditeur à plusieurs noeuds destinataires,
- le noeud destinataire d'un message retourne un message d'acquittement au noeud expéditeur après réception du message.

Le procédé est valable même pour les réseaux filaires et même à 1 seul bond. Il suffit d'avoir parmi les destinataires des noeuds connectés à travers des liens de débits différents et/ou possédant des capacités de traitement de calcul différentes.

L'invention se situe dans le domaine des réseaux multi-destinataires dans lesquels un même message doit être adressé à plusieurs noeuds destinataires ayant des propriétés de connexions différentes au travers éventuellement de plusieurs noeuds intermédiaires, les vitesses de transmission sur les différents liens étant différentes ainsi que les temps de traitement par les noeuds destinataires et/ou intermédiaires. Elle s'applique plus généralement à tout réseau multi-destinataire où les caractéristiques des communications pour atteindre les noeuds destinataires sont différentes. Cela peut être du aux raisons suivantes :

- Les liens reliant le noeud expéditeur à chacun des noeuds destinataires possèdent des capacités et des débits différents. Cela produit des délais de transmission et de propagation variables pour chaque noeud destinataire ;
- Les noeuds possèdent des capacité de calcul et de traitement différentes. Dans de telles situations, le temps de réponse varie pour chaque noeud destinataire ;
- Dans le cas d'un réseau multi-bond, les noeuds destinataires peuvent se trouver à des nombres de bonds différents du noeud expéditeur ; L'asymétrie de la topologie du réseau ajoutée aux deux raisons précédemment citées, rendent les délais de communication différents pour chaque noeud destinataire.

Ainsi, dans les réseaux sans fil multi-destinataires multi-bonds, les noeuds destinataires peuvent se situer à un seul ou à plusieurs bonds de la source.

Les paquets ou messages sont adressés par le noeud expéditeur à une certaine cadence d'envoi vers plusieurs noeuds destinataires. Cette cadence d'envoi doit tenir compte des capacités de vitesse de transmission sur chacun des liens vers tous les noeuds destinataires potentiels. En particulier, cette cadence doit tenir compte des capacités des différents liens et des congestions éventuelles dues aux messages concurrents devant transiter sur des mêmes liens. La fiabilité des liens impacte également la qualité de la transmission.

Afin de chercher à apporter une solution à ce problème de fiabilité et de congestion, plusieurs solutions ont été proposées au travers de protocoles.

En particulier, le protocole NORM (RFC 5740) gère la fiabilité et le contrôle de congestion à l'aide de deux modules séparés. Des acquittements négatifs (NACK) sont utilisés pour la fiabilisation de la transmission et un mécanisme basé sur TFRC (TCP Friendly Rate Control) est utilisé pour le contrôle des congestions. Ce mécanisme prévoit, selon le protocole NORM, le calcul d'une même cadence vers chaque noeud destinataire à partir des acquittements reçus et définit une cadence de transmission des messages pour l'ensemble des noeuds destinataires afin de satisfaire le noeud destinataire le plus lent.

Le protocole NORM pénalise de manière très importante les noeuds destinataires bénéficiant de capacités de transport élevées, puisque leur débit est aligné sur le débit du noeud le plus lent.

Cette solution n'est pas adaptée pour l'optimisation de la bande passante.

On connaît par ailleurs le protocole SMCC (Smooth Multirate Multicast Congestion Control publié dans la conférence IEEE Infocom 03). Ce protocole propose de transmettre depuis un même noeud expéditeur plusieurs flux du même trafic de données sur plusieurs canaux avec des débits croissants. Un noeud destinataire, en fonction de ses capacités, s'abonne au canal le plus adapté.

Le protocole SMCC propose d'adapter le débit dans chaque canal avec une technique basée sur le protocole TFRC. Il permet également à un noeud destinataire de passer dynamiquement d'un canal à un autre canal. Ce protocole ne gère pas la fiabilité des échanges et se contente de créer un nombre fixé de canaux, sans que le noeud expéditeur ou les noeuds destinataires utilisant les canaux fournissant les données ne puissent influer sur les débits de chaque canal.

Ainsi, le protocole SMCC n'optimise pas la bande passante lors des transmissions puisque le noeud expéditeur transmet le maximum de données possible et dans tous les canaux avec le but d'atteindre le maximum de noeuds destinataires.

Les documents suivants :

US 2009/141631,

"TCP with gateway adaptive pacing for multihop wireless networks with Internet connectivity", de ELRAKABAWY ET AL, COMPUTER NETWORKS, ELSEVIER

SCIENCE PUBLISHERS B.V., AMSTERDAM, NL,"A Survey on Congestion Control for MobileAd-Hoc Networks", Christian Lochert publié dans Wireless Communications and Mobile Computing, 12 avril 2007, divulguent également des solutions essentiellement basées sur l'adaptation de débit afin d'éviter les congestions et de lisser le débit de données.

L invention a pour but de proposer un procédé, un noeud expéditeur et un réseau de transmission d'informations dans un réseau multi-destinataires permettant un contrôle de la fiabilité des transmissions et simultanément une optimisation de la bande passante.

A cet effet, l'invention a pour objet un procédé de transmission de messages du type précité, **caractérisé en ce qu'il** comporte :

- une étape de répartition, par le noeud expéditeur, des noeuds destinataires dans au moins deux groupes de noeuds destinataires suivant un critère de répartition prédéterminé prenant en compte les temps de parcours aller/retour du message entre l'envoi du message et la réception du message d'acquittement du noeud destinataire, et
- une étape d'envoi de messages aux noeuds destinataires d'un même groupe avec un délai de latence entre l'envoi de deux messages successifs vers des mêmes noeuds destinataires du même groupe, ces délais de latence, chacun propre à un groupe et définissant le débit du groupe, étant différents d'un groupe à l'autre.

Suivant des modes particuliers de mise en oeuvre, le procédé de transmission comporte l'une ou plusieurs des caractéristiques suivantes :

- ledit critère de répartition prédéterminé porte sur la comparaison du temps de parcours du message aller/retour avec un intervalle de temps caractéristique propre du groupe considéré ;
- le délai de latence pour un groupe déterminé est inférieur ou égal à la borne supérieure de l'intervalle de temps caractéristique propre au groupe ;
- pour au moins un groupe, le délai de latence est égal au temps de parcours aller/retour le plus long pour le message précédent de tous les noeuds destinataires du groupe ;
- ledit critère de répartition prédéterminé est recalculé au cours du temps en fonction de la répartition des noeuds destinataires entre les groupes ;
- le recalcul du critère de répartition prédéterminé est effectué périodiquement ;
- le recalcul du critère de répartition prédéterminé est effectué pour maximiser le débit total du réseau ;
- le recalcul du critère prédéterminé est effectué dans le cas de M groupes pour rendre maximale la fonction

$$\sum_{i=1}^{M} N_i \frac{K}{T_{\min i-i+1}} \text{ avec } 1 \le N_i \le Total - \sum_{j=1}^{i-1} N_j$$

où M est le nombre de groupes, $N_i$ le nombre de noeuds destinataires appartenant au groupe *i, K* est la taille des messages envoyés, *Total* le nombre total de noeuds destinataires, et $T_{\min i-i+1}$ est la valeur utilisée pour le critère de répartition entre les groupes i et i+1 ;
- le recalcul du critère prédéterminé est effectué dans le cas de deux groupes pour rendre maximale la fonction *(N.K / $T_{min1-2}$) + L.K / $T_{max}$)*, où N est le nombre de noeuds destinataires ayant envoyé un acquittement, K est une constante, $T_{min1-2}$ est la valeur utilisée pour le critère de répartition entre les deux groupes, L est le nombre de noeuds destinataires n'ayant pas envoyé leur acquittement, $T_{max}$ est une valeur supérieure à $T_{min1-2}$ ;
- il comporte une étape de réaffectation d'un noeud destinataire d'un groupe d'origine à un groupe de destination par le noeud expéditeur sur requête du noeud destinataire.

L'invention a également pour objet un noeud expéditeur pour un réseau de transmission de messages multi-destinataires **caractérisé en ce qu'**un noeud expéditeur propre à la transmission de messages vers plusieurs noeuds destinataires dans un réseau, le noeud comportant qu'il comporte :

- des moyens pour adresser le même message à plusieurs noeuds destinataires,
- des moyens pour recevoir de chaque noeud destinataire un message, un message d'acquittement après réception du message,
  **caractérisé en ce qu'il** comporte que :
- des moyens de répartition, des noeuds destinataires dans au moins deux groupes de noeuds destinataires suivant un critère de répartition prédéterminé prenant en compte les temps de parcours aller/retour du message entre l'envoi du message et la réception du message d'acquittement du noeud destinataire,

- des moyens d'envoi de messages aux noeuds destinataires d'un même groupe avec un délai de latence entre l'envoi de deux messages successifs vers des mêmes noeuds destinataires du même groupe, ces délais de latence, chacun propre à un groupe et définissant le débit du groupe, étant différents d'un groupe à l'autre.

L'invention a également pour objet un réseau de transmission de message comportant au moins un noeud expéditeur et plusieurs noeuds destinataires dans lequel chaque noeud destinataire comporte des moyens pour retourner un message d'acquittement au noeud expéditeur après réception d'un message, **caractérisé en ce que** le ou chaque noeud expéditeur est tel que défini ci-dessus.

Chaque noeud destinataire comporte des moyens pour adresser au noeud expéditeur une requête de changement de groupe et le noeud expéditeur comporte des moyens de réaffectation du noeud destinataire d'un groupe d'origine à un groupe de destination en fonction de la requête de changement de groupe.

L'invention sera mieux comprise à la lecture de la description qui va suivre, donnée uniquement à titre d'exemple et faite en se référant aux dessins sur lesquels :

- la figure 1 est une vue schématique d'une partie d'un réseau de transmission multi-destinataires et multi-bonds ;
- la figure 2 est une vue schématique de la structure d'un noeud expéditeur et d'un destinataire du réseau de la figure 1 ;
- la figure 3 est une représentation schématique de la répartition des noeuds du réseau en deux groupes distincts selon l'invention ; et
- la figure 4 est un organigramme du procédé mis en oeuvre dans un noeud expéditeur et du réseau de la figure 1.

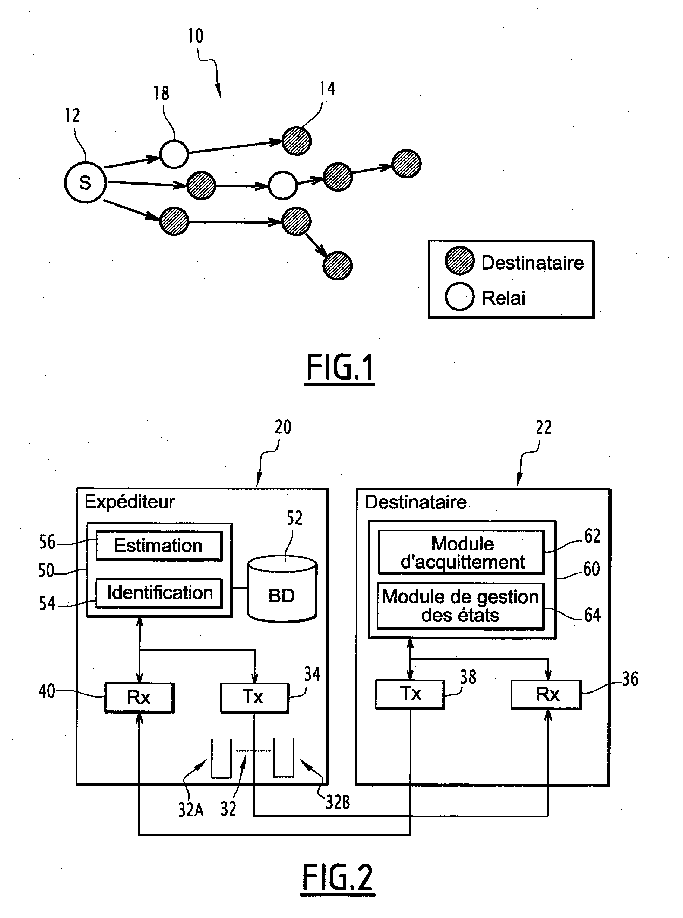

Le réseau 10 multi-destinataires et multi-bonds illustré sur la figure 1 est par exemple un réseau sans fil de type ad hoc. Sur ce schéma, les noeuds du réseau sont illustrés par des cercles et les liens entre un noeud expéditeur et un noeud destinataire sont illustrés par des flèches.

Compte tenu de la limitation de la distance de transmission sur le réseau, et comme connu en soi, un message émis par un noeud expéditeur 12 jusqu'à un noeud destinataire éloigné 14 transite sur un premier lien jusqu'à un noeud intermédiaire ou relais 18 puis sur un second lien réseau entre le noeud intermédiaire 18 et le noeud destinataire final 14. Ainsi, un message peut atteindre un noeud destinataire en un seul bond ou au travers de plusieurs bonds par l'intermédiaire de noeuds intermédiaires.

Les deux noeuds intermédiaires 18 sont ou non destinataires du message. Sur la figure 1, les destinataires d'un même message supposé émis par le noeud expéditeur 12 sont hachurés alors que les noeuds non destinataires et formant seulement noeuds intermédiaires sont illustrés par des cercles non hachurés.

Le mode de fonctionnement de tels réseaux est connu en soi et ne sera pas décrit plus avant. De tels réseaux sont utilisés notamment comme réseaux tactiques militaires, les noeuds du réseau étant formés de moyens d'émission-réception portés par des véhicules.

Dans un tel réseau, les noeuds expéditeurs sont propres à adresser, à des groupes de noeuds, un même message à des cadences prédéfinies. Ces cadences sont définies par un temps de latence, séparant les envois de messages successifs vers les noeuds d'un même groupe.

Selon l'invention, les noeuds destinataires d'un même message sont répartis en au moins deux groupes de noeuds pour lesquels les messages sont transmis à des cadences distinctes pour les groupes de noeuds. Ces cadences sont définies par le noeud expéditeur et variables en fonction du temps. Les noeuds sont répartis dans les différents groupes en fonction d'un critère de répartition prédéfini mis en oeuvre dans un algorithme appliqué par le noeud expéditeur en fonction de différentes variables comme cela sera expliqué dans la suite. Ainsi, la répartition des noeuds entre les groupes change au cours du temps et le critère de répartition évolue également au cours du temps ; ceci afin d'optimiser une contrainte particulière comme par exemple le débit totale du réseau. La contrainte optimisée avec l'algorithme détaillé plus loin est le débit total du réseaux défini comme la somme des débits des groupes du réseau. Le débit d'un groupe est la somme des débits des membres du groupe. Cependant, d'autres contraintes peuvent être choisies et optimisées dans le cadre générique proposé par l'invention.

Sur la figure 2 est représentée la structure d'un noeud expéditeur 20 et d'un noeud destinataire 22. En pratique, un même noeud est couramment un noeud expéditeur et un noeud destinataire en fonction des transmissions devant être assurées. Un noeud du réseau comporte donc généralement les structures cumulées des noeuds 20 et 22.

Le noeud expéditeur 20 comporte, pour chaque groupe de noeuds destinataires, une pile 32 dans laquelle sont stockés les messages à envoyer, avec les adresses des noeuds destinataires appartenant au groupe. Ainsi, un même message devant être adressé à des noeuds de plusieurs groupes figure dans plusieurs piles 32.

Le noeud expéditeur 20 comporte un module d'émission 34 propre à recevoir les messages des différentes piles et à les adresser, pour les noeuds destinataires d'une même pile simultanément, à la cadence propre à la pile suivant le protocole mis en oeuvre vers les noeuds destinataires devant recevoir ces messages.

Comme connu en soi, chaque noeud destinataire 22 comporte un module de réception 36 propre à recevoir les messages du noeud expéditeur. Chaque noeud destinataire comporte également un module de transmission 38 propre à retransmettre vers le noeud destinataire final le message si le noeud destinataire agit en tant que noeud relais. Ce module d'émission 38 est propre également à transmettre, suite à la réception d'un message, un message d'acquittement vers le noeud expéditeur pour confirmer la réception correcte ou non du message précédemment reçu du noeud expéditeur, ou encore un message d'état.

Le noeud expéditeur 20 comporte, pour la réception des messages, un module de réception 40 propre à recevoir des messages d'acquittement, ou des messages d'état tels qu'une demande de changement de groupe d'un noeud destinataire.

Quand un même noeud est à la fois un noeud expéditeur et un noeud destinataire, les modules d'émission 34, 38 et de réception 36, 40 sont constitués ou non d'un même module respectivement.

Le noeud d'expédition 20 comporte, outre les modules de transmission 34 et 40, une unité de traitement d'informations 50 reliée à une base de données 52.

La base de données 52 contient, pour chaque noeud destinataire potentiel du réseau, le groupe auquel il appartient. De préférence, en outre, pour chaque noeud destinataire, la base de données comporte le temps moyen de parcours aller/retour observé entre le noeud expéditeur et le noeud destinataire considéré. Ce temps moyen de parcours aller/retour est par exemple la moyenne glissante des temps de parcours constatés sur une fenêtre de N valeurs successives.

Le temps de parcours aller/retour est la durée s'écoulant entre l'instant d'envoi d'un message vers un noeud destinataire et l'instant de réception par le noeud expéditeur de l'acquittement adressé par le noeud destinataire ayant reçu le message.

L'unité de traitement d'informations 50 comporte, outre les moyens connus en soi adaptés pour la gestion du noeud expéditeur, un module d'identification 54 propre à déterminer pour chaque message adressé depuis le noeud expéditeur vers un noeud destinataire le temps de parcours aller/retour. A cet effet, le module d'identification détermine, à partir d'un signal d'horloge, l'instant d'envoi d'un message par le noeud expéditeur et l'instant de réception du message d'acquittement issu du destinataire après réception de ce message. Il en déduit le temps de parcours du message aller/retour.

L'unité de traitement 50 comporte en outre un module d'estimation 56 propre à définir le critère de répartition des noeuds destinataires entre les différents groupes et à assurer, au cours du temps, la répartition de ces noeuds dans les groupes en fonction du critère de répartition défini à l'instant considéré.

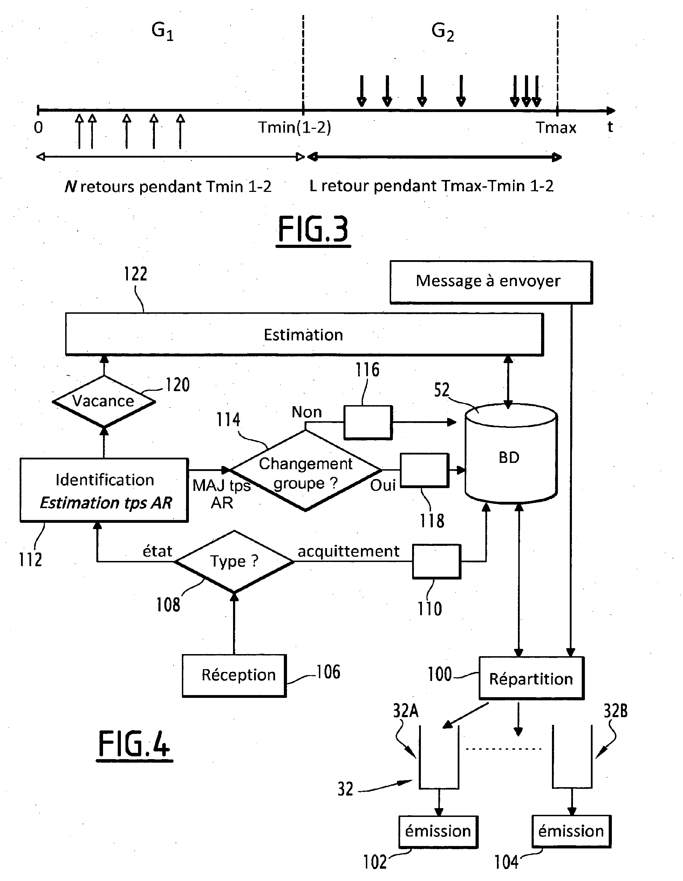

De manière générale, l'unité 50 est propre à assurer la mise en oeuvre de l'algorithme dont l'organigramme est illustré sur la figure 4.

Chaque noeud destinataire 22 comporte également une unité de traitement d'informations 60 assurant la gestion du noeud. Cette unité comporte un module d'acquittement 62 propre à piloter l'envoi par le noeud destinataire d'un message d'acquittement vers le noeud expéditeur d'un message à chaque message reçu.

Comme connu en soi, plusieurs stratégies de gestion d'acquittement peuvent être mises en oeuvre. Par exemple, le message initial est segmenté et transféré en petits segments et ce n'est qu'à la réception du dernier que le noeud destinataire envoie un acquittement qui spécifie les segments bien reçus et ceux qui ont été perdus.

Une stratégie est mise en oeuvre par le noeud expéditeur à la réception du message d'acquittement si un problème de transmission a été constaté. Cette stratégie est de tout type connu adapté pour la retransmission partielle ou totale du message et ne sera pas décrite ici.

L'unité 60 comporte également un module 64 de gestion des états. Ce module est adapté pour notifier de manière explicite, sous forme d'un état à un ou plusieurs noeuds expéditeurs, un changement survenu au niveau du noeud destinataire. Ce changement est par exemple une congestion du réseau ou même une évolution de l'état du noeud destinataire lui-même, c'est-à-dire une incapacité de recevoir des messages à un rythme élevé ou un changement de propriété des connexions. Cet état est par exemple caractéristique de la demande d'un noeud destinataire de passer d'un groupe à cadence d'émission élevée vers un groupe à cadence d'émission plus lente ou au contraire d'un groupe à cadence d'émission lente à un groupe à cadence d'émission plus élevée.

Selon l'invention et pour chaque noeud expéditeur considéré, les noeuds destinataires potentiels sont répartis en au moins deux groupes. Chaque groupe de noeuds est caractérisé par une cadence propre de transmission des messages. Ces cadences de transmission et/ou la répartition des noeuds entre les groupes de destinataires varient au cours du temps en fonction du critère de répartition prédéterminé qui lui-même est avantageusement variable au cours du temps.

Les cadences de transmission sont différentes d'un groupe à l'autre.

Dans l'exemple considéré, et illustré sur la figure 3, les noeuds sont répartis en seulement deux groupes. Un nombre de groupes plus important est choisi en variante.

Les noeuds destinataires sont répartis entre les deux groupes en fonction d'un critère portant sur le temps moyen de parcours aller/retour d'un message entre le noeud expéditeur et le noeud destinataire.

Ainsi, les noeuds destinataires dont le temps moyen de parcours aller/retour est compris entre 0 et $T_{min1-2}$ sont

des éléments du premier groupe G1 dit rapide. On suppose que N éléments figurent dans ce premier groupe, chaque noeud du premier groupe étant illustré par une flèche verticale ascendante positionnée suivant l'axe des temps, au temps de parcours moyen aller/retour d'un message entre l'expéditeur et ce noeud.

De même, L noeuds dont le temps de parcours moyen aller/retour est compris entre $T_{min1-2}$ et une valeur $T_{max}$ sont membres du second groupe G2 dit lent. Ils sont également représentés par une flèche verticale mais descendante au temps de parcours moyen qui leur est propre.

Ainsi, chaque groupe est caractérisé par un intervalle caractéristique $[0, T_{min1-2}]$ ou $[T_{min1-2}, T_{max}]$ contenant les temps de parcours moyens aller/retour des noeuds de ce groupe.

L'algorithme illustré sur la figure 4 est propre à commander l'envoi des messages avec une cadence propre à chaque groupe en fonction du groupe auquel appartient le noeud destinataire du message, ainsi qu'à modifier au cours du temps la répartition des noeuds entre les groupes, notamment en modifiant le critère de répartition prédéterminé définissant la frontière entre les différents groupes.

Dans l'exemple considéré, ce critère correspond à une comparaison du temps moyen de parcours aller/retour à la valeur $T_{min1-2}$, laquelle valeur $T_{min1-2}$ varie au cours du temps comme cela sera expliqué dans la suite de la description.

Pour un message à envoyer, et comme illustré sur la figure 4, le message est adressé au module d'émission 34 du noeud expéditeur avec la liste des noeuds devant être destinataires.

Lors d'une étape 100, le message est distribué, éventuellement avec transfert du message dans les piles 32 en fonction des noeuds devant être destinataires. La pile des noeuds du groupe rapide est notée 32A alors que la pile du groupe lent est notée 32B.

Aux étapes 102 et 104, les messages présents dans les piles 32 sont chacun adressés aux noeuds destinataires avec la cadence d'émission propre au groupe.

Dans l'exemple considéré, les messages à destination des noeuds du groupe G1 émis à l'étape 102 sont adressés à une fréquence régulière en étant espacée d'un délai de latence égal à la valeur $T_{min1-2}$ utilisée comme critère de répartition entre les groupes G1 et G2.

Dans l'étape 104, les messages à destination des noeuds destinataires du second groupe G2 sont adressés avec un délai de latence égal à la valeur $T_{max}$ prédéterminée ou au maximum des temps de parcours aller/retour entre le noeud expéditeur et le noeud destinataires pour le message précédent, cette dernière valeur étant retenue si elle est inférieure à $T_{max}$.

Le noeud expéditeur écoute en permanence à l'étape 106 les messages d'acquittement ou d'état qui lui sont adressés par les autres noeuds du réseau.

A l'étape 108, il détermine la nature des messages reçus.

Si le message reçu est un message d'état contenant une demande explicite issue d'un noeud destinataire de changer de groupe, une inscription est faite dans la base de données 52 à l'étape 110 et le noeud est transféré de son groupe d'origine au groupe de destination requis.

Si le message reçu est un message d'acquittement, ce message et son instant de réception sont traités lors d'une étape d'identification 112 réalisée par le module d'estimation 54. Lors de cette étape, le temps de parcours moyen aller/retour du message est déterminé. A l'étape 114, ce temps de parcours aller/retour est comparé au seuil $T_{min1-2}$. Si le temps de parcours moyen aller/retour reste dans l'intervalle caractéristique du groupe actuel du noeud destinataire, le noeud est maintenu dans le groupe.

En revanche, si le temps de parcours moyen aller/retour n'est pas compris dans l'intervalle caractéristique du groupe considéré, le noeud destinataire est replacé dans le groupe dont l'intervalle caractéristique contient un temps de parcours moyen aller/retour constaté par inscription dans la base 52 à l'étape 118.

A l'expiration de $T_{min1-2}$ tous les noeuds destinataires n'ayant pas répondu sont considérés comme lents, le message envoyé est transféré dans la pile du groupe G2 dit lent. Le message reste dans cette pile jusqu'à acquittement de tous les noeuds du groupe lent. C'est à ce moment que la dernière pile est vidée en considérant que tous les noeuds destinataires ont bien été servis.

A l'étape 120, l'unité de traitement 50 détermine les périodes de vacance, c'est-à-dire les périodes au cours desquelles aucun message n'est envoyé ou reçu. Pendant ces périodes, l'étape 122 de ré-estimation du critère de répartition entre les groupes est mise en oeuvre par le module d'estimation 56.

En variante, l'étape 122 est réalisée périodiquement et non pas seulement pendant les périodes de vacances.

Le critère de répartition est modifié lors de l'étape d'estimation 122 en vue de maximiser le nombre de noeuds destinataires servis à débit maximal.

Dans l'exemple considéré, l'estimation de la valeur $T_{min1-2}$ servant de variable pour le critère de répartition s'effectue de la manière suivante.

La valeur de $T_{min1-2}$ est calculée pour assurer un débit optimal pour chacun des groupes de destinataires. Ce débit optimal correspond à la maximisation du débit total du réseau.

Un mécanisme de calcul dynamique de $T_{min1-2}$ permet de suivre l'évolution de la taille des groupes et d'assurer que chacun de ces groupes obtient un débit adéquat qui maximise l'utilisation des ressources du réseau. Cet algorithme permet aussi de partir d'une configuration initiale simple pour retrouver un point d'opération optimal. L'algorithme de calcul de $T_{min1-2}$ est appelé périodiquement et/ou pendant la vacance du réseau comme explicité précédemment.

Dans un système à deux groupes, la valeur de $T_{min1-2}$ détermine le débit obtenu par le premier groupe. En effet, les noeuds destinataires de ce groupe ne seront servis par un nouveau message au plus tard qu'après que la durée $T_{min1-2}$ est écoulée. Le débit ainsi obtenu par le groupe rapide G1 est de *taille_message* / $T_{min1-2}$ où *taille_message* est le nombre d'octets qui constitue le message à envoyer.. De la même façon, le débit observé par les noeuds lents du groupe G2 est approximé par *taille_message* / $T_{max}$ où $T_{max}$ est la durée d'attente maximale.

L'objectif de l'estimation de $T_{min}$ est la maximisation du débit total observé par le réseau qui peut aussi être vu comme la maximisation du nombre de noeuds destinataires servis à un débit maximal. Cela s'écrit formellement de la façon suivante :

$$Max(N.K \, / \, T_{min1-2})$$

où *K* est une constante et *N* le nombre de noeuds destinataires du groupe rapide G1.

D'après la formule ci-dessus, le débit croit linéairement avec *N* et décroît avec $T_{min1-2}$. En d'autres termes, pour améliorer le débit du groupe rapide G1, il faut attendre le retour d'un maximum de noeuds destinataires mais aussi attendre le moins longtemps possible. Pratiquement, ces deux contraintes sont contradictoires et l'estimation du $T_{min1-2}$ optimal se résume à trouver le point de rupture ou extremum dans la fonction.

Estimer ce point de rupture, c'est-à-dire $T_{min1-2}$, dépend de la contrainte d'optimisation choisie dans le réseau. Une solution possible est de se baser sur l'objectif de maximisation du débit du système en comparant le cas où un noeud destinataire qui envoie un retour est considéré comme rapide par rapport au cas où ce dernier est considéré lent. Cela revient à faire correspondre $T_{min1-2}$ au temps de parcours aller/retour d'un noeud destinataire et calculer quel $T_{min1-2}$ maximise le débit avec la formule suivante :

$$(N.K \, / \, T_{min1-2}) + L.K/(T_{max})$$

où N est le nombre de noeuds destinataires ayant envoyé un acquittement en comptant le noeud destinataire qui vient de faire parvenir son acquittement et *L* est le nombre de noeuds destinataires n'ayant pas encore acquittés (nombre total - *N*).

La formule précédente compare le débit des deux groupes. Pour une optimisation de performance, cette somme doit être maximisée en d'autres termes à avoir un débit maximal pour le groupe rapide tout en gardant un nombre raisonnable de destinataires dans chacun des groupes.

Etant donné que le calcul de $T_{min1-2}$ s'effectue périodiquement ou en cas de vacance du système, peu de contraintes de temps de calcul s'imposent.

Un exemple d'algorithme qui exploite les métriques présentées est le suivant :

Etapes de l'algorithme :

Entrées

- NB //Nombre_de_destinataires
- Tps_AR[NB] //tableau des AR pour chaque destinataire (peut être une moyenne pondérée)
- $T_{max}$ //dépend taille du réseau, type de trafic ...
- max, indice, //variables intermédiaires

Retour (sortie)

- Valeur de $T_{min1-2}$

Déroulement

- trier Tps_AR[NB]
- max = 0 (initialisation)
- tant que j < NB

$$\text{calcul result} = (\, j. \; K/Tps\_AR[0]) + (NB\text{-}j).K/(T_{max})$$

si result > max
max = result
indice = j
fin si
fin tant que
- $T_{min1\text{-}2}$ = Tps_AR[indice] + Epsilon //le retour de l'indice permet d'estimer le nombre de destinataires dans le groupe

FIN

L'algorithme calcule la valeur optimale de $T_{min1\text{-}2}$ en fonction du critère de maximisation utilisé ; à savoir ici la maximisation du débit total du réseau. L'algorithme est mis en oeuvre par le noeud expéditeur au moment où le calcul d'une nouvelle valeur de $T_{min\,1\text{-}2}$ est nécessaire donc une fois que la base de données de la Figure 2 contient des temps aller-retour pour tous les noeuds destinataires. Les temps aller-retour sont d'abord triés par ordre croissant, puis $T_{min1\text{-}2}$ est positionné juste après le temps aller-retour (Tps_AR[j]) de chaque destinataire. En positionnant $T_{min1\text{-}2}$, le débit total du réseau ainsi obtenu est calculé. Cette procédure est répétée pour tous les noeuds destinataires et le débit maximal ainsi que la valeur Tps_AR[j] qui maximise ce débit sont conservés dans des variables intermédiaires (max et indice). L'algorithme retourne à la fin de son exécution la valeur de $T_{min1\text{-}2}$ située juste après le temps aller retour qui offre le meilleur débit total du réseau. Plus généralement , le recalcul du critère prédéterminé est effectué dans le cas de M groupes pour rendre maximal la fonction

$$\sum_{i=1}^{M} N_i \, \frac{K}{T_{min\,i\text{-}i+1}}$$

avec

$$1 \le N_i \le Total - \sum_{j=1}^{i-1} N_j$$

où *M* est le nombre de groupes, $N_i$ est le nombre de noeuds destinataires appartenant au groupe *i*, *K* est la taille des messages envoyés, *Total* le nombre total de noeuds destinataires, et $T_{min\,i\text{-}i+1}$ est la valeur utilisée pour le critère de répartition entre les groupes *i* et *i+1*.

Le nouveau critère de segmentation entre les groupes est appliqué lors de l'étape 122 et les groupes ainsi modifiés sont mémorisés dans la base 52.

En outre, lors de la transmission, les messages d'état reçus d'un noeud destinataire indiquant l'incapacité du noeud à suivre la cadence imposée par le noeud émetteur dans un groupe particulier forcent un passage du noeud destinataire à un groupe plus lent quand cela est possible. L'envoi d'un tel état est provoqué par à un changement de propriétés des liens vers un destinataire particulier ou même par un changement dans le mode de fonctionnement du noeud destinataire .

Une répartition inégalitaire des noeuds entre les groupes force un recalcul de $T_{min1\text{-}2}$ afin de retrouver la valeur optimale en fonction des contraintes à maximiser.

Par ailleurs, la transmission incorrecte totale ou partielle de messages est traitée par une unité de traitement spécifiquede l'expéditeur 20 pour assurer une retransmission suivant un algorithme connu en soi permettant une qualité de transmission satisfaisante pour le service sous-jacent. La solution la plus simple consiste à retransmettre les messages erronés pour chaque groupe.

On conçoit qu'un tel algorithme permet d'optimiser la bande passante du fait de la répartition évolutive des noeuds destinataires entre les groupes et qu'il permet d'assurer la fiabilité de la transmission grâce aux acquittements reçus, lesquels sont utilisés également pour la répartition entre les groupes.

**Revendications**

1. Procédé de transmission de messages depuis un noeud expéditeur (12) vers plusieurs noeuds destinataires (14) dans un réseau (10) dans lequel :

   - le même message est adressé depuis le noeud expéditeur (12) à plusieurs noeuds destinataires (14),
   - le noeud destinataire (14) d'un message retourne un message d'acquittement au noeud expéditeur (12) après réception du message,
   **caractérisé en ce qu'il** comporte une étape (114, 122) de répartition, par le noeud expéditeur (12), des noeuds destinataires (14) dans au moins deux groupes (G1, G2) de noeuds destinataires suivant un critère de répartition prédéterminé prenant en compte les temps de parcours aller/retour du message entre l'envoi du message et la réception du message d'acquittement du noeud destinataire, et
   - une étape d'envoi (102, 104) de messages aux noeuds destinataires d'un même groupe avec un délai de latence entre l'envoi de deux messages successifs vers des mêmes noeuds destinataires du même groupe, ces délais de latence, chacun propre à un groupe et définissant le débit du groupe, étant différents d'un groupe à l'autre.

2. Procédé selon la revendication 1, **caractérisé en ce que** ledit critère de répartition prédéterminé porte sur la comparaison du temps de parcours du message aller/retour avec un intervalle de temps caractéristique propre du groupe considéré.

3. Procédé selon la revendication 2, **caractérisé en ce que** le délai de latence pour un groupe déterminé est inférieur ou égal à la borne supérieure de l'intervalle de temps caractéristique propre au groupe.

4. Procédé selon l'une quelconque des revendications précédentes, **caractérisé en ce que** pour au moins un groupe, le délai de latence est égal au temps de parcours aller/retour le plus long pour le message précédent de tous les noeuds destinataires du groupe.

5. Procédé selon l'une quelconque des revendications précédentes, **caractérisé en ce que** ledit critère de répartition prédéterminé est recalculé au cours du temps en fonction de la répartition des noeuds destinataires entre les groupes.

6. Procédé selon la revendication 5, **caractérisé en ce que** le recalcul du critère de répartition prédéterminé est effectué périodiquement.

7. Procédé selon la revendication 5 ou 6, **caractérisé en ce que** le recalcul du critère de répartition prédéterminé est effectué pour maximiser le débit total du réseau (10).

8. Procédé selon la revendication 7 prise avec la revendication 2, **caractérisé en ce que** le recalcul du critère prédéterminé est effectué dans le cas de M groupes pour rendre maximale la fonction

$$\sum_{i=1}^{M} N_i \frac{K}{T_{\min i-i+1}} \text{ avec } 1 \leq N_i \leq Total - \sum_{j=1}^{i-1} N_j$$

   où $M$ est le nombre de groupes, $N_i$ le nombre de noeuds destinataires appartenant au groupe $i$, $K$ est la taille des messages envoyés, $Total$ le nombre total de noeuds destinataires, et $T_{\min i\text{-}i+1}$ est la valeur utilisée pour le critère de répartition entre les groupes i et i+1.

9. Procédé selon la revendication 8, **caractérisé en ce que** le recalcul du critère prédéterminé est effectué dans le cas de deux groupes pour rendre maximale la fonction *(N.K / $T_{min1\text{-}2}$) + L.K / $T_{max}$)*, où N est le nombre de noeuds destinataires ayant envoyé un acquittement, K est une constante, $T_{min1\text{-}2}$ est la valeur utilisée pour le critère de répartition entre les deux groupes, L est le nombre de noeuds destinataires n'ayant pas encore envoyé leur acquittement, $T_{max}$ est une valeur supérieure à $T_{min1-2}$.

**10.** Procédé selon l'une quelconque des revendications précédentes, **caractérisé en ce qu'il** comporte une étape de réaffectation d'un noeud destinataire d'un groupe d'origine à un groupe de destination par le noeud expéditeur sur requête du noeud destinataire.

**11.** Noeud expéditeur (12) propre à la transmission de messages vers plusieurs noeuds destinataires (14) dans un réseau (10), le noeud comportant :

- des moyens pour adresser le même message à plusieurs noeuds destinataires (14),
- des moyens pour recevoir de chaque noeud destinataire (14) un message, un message d'acquittement après réception du message,
**caractérisé en ce qu'**il comporte :
- des moyens de répartition, des noeuds destinataires (14) dans au moins deux groupes (G1, G2) de noeuds destinataires suivant un critère de répartition prédéterminé prenant en compte les temps de parcours aller/retour du message entre l'envoi du message et la réception du message d'acquittement du noeud destinataire,
- des moyens d'envoi de messages aux noeuds destinataires d'un même groupe avec un délai de latence entre l'envoi de deux messages successifs vers des mêmes noeuds destinataires du même groupe, ces délais de latence, chacun propre à un groupe et définissant le débit du groupe, étant différents d'un groupe à l'autre.

**12.** Réseau (10) de transmission de messages comportant au moins un noeud expéditeur (12) et plusieurs noeuds destinataires (14) dans lequel, chaque noeud destinataire (14) comporte des moyens pour retourner un message d'acquittement au noeud expéditeur (12) après réception d'un message,
**caractérisé en ce que** le ou chaque noeud expéditeur (12) est selon la revendication 11.

**13.** Réseau (10) selon la revendication 12, **caractérisé en ce que** chaque noeud destinataire (14) comporte des moyens pour adresser au noeud expéditeur (12) une requête de changement de groupe et **en ce que** le noeud expéditeur (12) comporte des moyens de réaffectation du noeud destinataire (14) d'un groupe d'origine à un groupe de destination en fonction de la requête de changement de groupe.

**Patentansprüche**

**1.** Verfahren für die Übertragung von Nachrichten von einem Sendeknoten (12) an mehrere Empfangsknoten (14) in einem Netz (10), in dem:

- dieselbe Nachricht vom Sendeknoten (12) an mehrere Empfangsknoten (14) geschickt wird,
- der Empfangsknoten (14) einer Nachricht eine Quittungsnachricht an den Sendeknoten (12) nach Empfang der Nachricht zurückschickt,
**dadurch gekennzeichnet, dass** es einen Aufteilungsschritt (114, 122) durch den Sendeknoten (12) der Empfangsknoten (14) in mindestens zwei Empfangsknotengruppen (G1, G2) gemäß einem vorbestimmten Aufteilungskriterium aufweist, das die Zeit für den Hin- und Rückweg der Nachricht zwischen dem Versand der Nachricht und dem Empfang der Quittungsnachricht des Empfangsknotens berücksichtigt, und
- einen Versandschritt (102, 104) von Nachrichten an die Empfangsknoten einer selben Gruppe mit einer Latenzfrist zwischen dem Versand von zwei aufeinanderfolgenden Nachrichten an dieselben Empfangsknoten derselben Gruppe, wobei diese Latenzfristen, von denen jede für eine Gruppe speziell ist und den Durchsatz der Gruppe definiert, von einer Gruppe zur anderen unterschiedlich sind.

**2.** Verfahren nach Anspruch 1, **dadurch gekennzeichnet, dass** sich das vorbestimmte Aufteilungskriterium auf den Vergleich der Wegezeit der Hin-/Rücknachricht mit einem charakteristischen Zeitintervall, das für die betrachtete Gruppe speziell ist, bezieht.

**3.** Verfahren nach Anspruch 2, **dadurch gekennzeichnet, dass** die Latenzfrist für eine bestimmte Gruppe kleiner oder gleich der oberen Grenzmarkierung des gruppenspezifischen charakteristischen Zeitintervalls ist.

**4.** Verfahren nach einem der vorangehenden Ansprüche, **dadurch gekennzeichnet, dass** für mindestens eine Gruppe die Latenzfrist gleich der für die vorangehende Nachricht aller Empfangsknoten der Gruppe längste Hin-/Rückwegezeit ist.

**5.** Verfahren nach einem der vorangehenden Ansprüche, **dadurch gekennzeichnet, dass** das vorbestimmte Aufteilungskriterium während der Zeit in Abhängigkeit von der Aufteilung der Empfangsknoten zwischen den Gruppen neuberechnet wird.

**6.** Verfahren nach Anspruch 5, **dadurch gekennzeichnet, dass** die Neuberechnung des vorbestimmten Aufteilungskriteriums periodisch durchgeführt wird.

**7.** Verfahren nach Anspruch 5 oder 6, **dadurch gekennzeichnet, dass** die Neuberechnung des vorbestimmten Aufteilungskriteriums durchgeführt wird, um den Durchsatz insgesamt des Netzes (10) zu maximieren.

**8.** Verfahren nach Anspruch 7, herangezogen mit Anspruch 2, **dadurch gekennzeichnet, dass** die Neuberechnung des vorbestimmten Kriteriums im Fall von M Gruppen durchgeführt wird, um die Funktion $\sum_{i=1}^{M} N_i \frac{K}{T_{min\,i\text{-}i+1}}$ mit

$$1 \leq N_i \leq Total - \sum_{j=1}^{i-1} N_j$$ zu maximieren,

wobei M die Anzahl der Gruppen ist, $N_i$ die Anzahl der zur Gruppe *i* gehörenden Empfangsknoten ist, K die Größe der geschickten Nachrichten ist, *Total* die Gesamtanzahl der Empfangsknoten und $T_{min\,i\text{-}i+1}$ der Wert ist, der für das Aufteilungskriterium zwischen den Gruppen i und i+1 verwendet wird.

**9.** Verfahren nach Anspruch 8, **dadurch gekennzeichnet, dass** die Neuberechnung des vorbestimmten Kriteriums im Fall von zwei Gruppen durchgeführt wird, um die Funktion *(N.K / $T_{min1\text{-}2}$) + L.K / $T_{max}$)* zu maximieren, wobei N die Anzahl der Empfangsknoten ist, die eine Quittung geschickt haben, K eine Konstante ist, $T_{min1\text{-}2}$ der für das Aufteilungskriterium zwischen den zwei Gruppen verwendet Wert ist, L die Anzahl der Empfangsknoten ist, die ihre Quittung noch nicht geschickt haben, $T_{max}$ ein Wert größer als $T_{min1\text{-}2}$ ist.

**10.** Verfahren nach einem der vorangehenden Ansprüche, **dadurch gekennzeichnet, dass** es einen Schritt der Neuzuweisung eines Empfangsknotens einer Ursprungsgruppe an eine Empfangsgruppe durch den Sendeknoten auf Anforderung des Empfangsknotens aufweist.

**11.** Sendeknoten (12), der zur Übertragung von Nachrichten an mehrere Empfangsknoten (14) in einem Netz (10) geeignet ist, wobei der Knoten aufweist:

- Mittel, um dieselbe Nachricht an mehrere Empfangsknoten (14) zu senden,
- Mittel, um von jedem Empfangsknoten (14) eine Nachricht, eine Quittungsnachricht nach Empfang der Nachricht zu erhalten,
**dadurch gekennzeichnet, dass** er aufweist:
- Aufteilungsmittel der Empfangsknoten (14) in mindestens zwei Empfangsknotengruppen (G1, G2) gemäß einem vorbestimmten Aufteilungskriterium, das die Zeiten für den Hin- und Rückweg der Nachricht zwischen dem Versand der Nachricht und dem Empfang der Quittungsnachricht des Empfangsknotens berücksichtigt,
- Versandmittel von Nachrichten an die Empfangsknoten einer selben Gruppe mit einer Latenzfrist zwischen dem Versand von zwei aufeinanderfolgenden Nachrichten an dieselben Empfangsknoten derselben Gruppe, wobei diese gruppenspezifischen Latenzfristen, die den Durchsatz der Gruppe definieren, von einer Gruppe zur anderen unterschiedlich sind.

**12.** Netz (10) für die Übertragung von Nachrichten, das mindestens einen Sendeknoten (12) und mehrere Empfangsknoten (14) aufweist, wobei jeder Empfangsknoten (14) Mittel aufweist, um eine Quittungsnachricht an den Sendeknoten (12) nach Empfang einer Nachricht zurückzuschicken, **dadurch gekennzeichnet, dass** der oder jeder Sendeknoten (12) nach Anspruch 11 ist.

**13.** Netz (10) nach Anspruch 12, **dadurch gekennzeichnet, dass** jeder Empfangsknoten (14) Mittel aufweist, um an den Sendeknoten (12) eine Anfrage zwecks Wechsels der Gruppe zu schicken und dass der Sendeknoten (12) Mittel für die Neuzuweisung des Empfangsknotens (14) einer Ursprungsgruppe an eine Empfangsgruppe in Abhängigkeit von der Anfrage zwecks Wechsels der Gruppe aufweist.

**Claims**

1.  A method for transmission of messages from a sender node (12) to multiple destination nodes (14) in a network (10) in which:

    - the same message is sent from the sender node (12) to multiple destination nodes (14),
    - the destination node (14) of a message returns an acknowledgment message to the sender node (12) after receiving the message,
    **characterised in that** it comprises a step (114, 122) of distribution, by the sender node (12), of the destination nodes (14) into at least two groups (G1, G2) of destination nodes according to a predetermined distribution criterion taking into account the to and from travel time between the sending of the message and the receiving of the acknowledgment message from the destination node, and
    - a step of sending (102, 104) of messages to destination nodes in the same group with a latency period between the sending of two successive messages to the same destination nodes of the same group, the latency periods, each specific to a group and defining the throughput rate of the group being different from one group to another.

2.  A method according to claim 1, **characterised in that** the said predetermined distribution criterion involves comparing the to and from travel time of the message with a characteristic time interval specific to the group considered.

3.  A method according to claim 2, **characterised in that** the latency period for a particular determined group is less than or equal to the upper limit of the characteristic time interval specific to the group.

4.  A method according of any one of the preceding claims, **characterised in that** for at least one group, the latency period is equal to the longest to and from travel time for the previous message of all the destination nodes of the group.

5.  A method according to any one of the preceding claims, **characterised in that** the said predetermined distribution criterion is recomputed over time according to the distribution of destination nodes among the groups.

6.  A method according to claim 5, **characterised in that** the recomputing of the predetermined distribution criteria is performed periodically.

7.  A method according to claim 5 or 6, **characterised in that** the recomputing of the predetermined distribution criterion is performed in order to maximise the total throughput of the network (10).

8.  A method according to claim 7 taken with claim 2, **characterised in that** the recomputing of the predetermined distribution criterion is performed in the case of M groups so as to maximise the function $\sum_{i=1}^{M} N_i \dfrac{K}{T_{\min i-i+1}}$ with

    $$1 \le N_i \le Total - \sum_{j=1}^{i-1} N_j$$

    where $M$ is the number of groups, $N_i$ is the number of destination nodes belonging to the group $i$, K is the size of messages sent, $Total$ is the total number of destination nodes, and $T_{\min ii-1}$ is the value used for the criterion of distribution between the groups i and i+1.

9.  A method according to claim 8, **characterised in that** the recomputing of the predetermined distribution criterion is performed in the case of two groups so as to maximise the function $(N.K / T_{min1-2}) + L.K / T_{max})$, where N is the number of destination nodes having sent an acknowledgment, K is a constant, $T_{min1-2}$ is the value used for the criterion of distribution between the two groups, L is the number of destination nodes that have not sent their acknowledgment, $T_{max}$ is a value greater than $T_{min1-2}$

10. A method according any one of the preceding claims, **characterised in that** it includes a step of reassigning of a destination node from an original group to a destination group by the sender node at the request of the destination node.

11. A sender node (12) appropriate for the transmission of messages to multiple destination nodes (14) in a network (10), the node consisting of :

- means for sending the same message to multiple destination nodes (14),
- means for receiving from each destination node (14) a message, a message of acknowledgement upon receipt of the message,
**characterised in that** it comprises:
- means for distribution, of destination nodes (14) in at least two groups (G1, G2) of destination nodes according to a predetermined distribution criterion taking into account the to and from travel time of the message between the sending of the message and receiving the message of acknowledgment from the destination node,
- means of sending messages to destination nodes of the same group with a latency period between the sending of two successive messages to the same destination nodes of the same group, these latency periods, each specific to a group and defining the throughput rate of the group being different from one group to another.

12. A network (10) for transmission of messages comprising at least one sender node (12) and multiple destination nodes (14) wherein each destination node (14) includes the means for returning an acknowledgment message back to the sender node (12) upon receiving a message,
**characterised in that** the or each sender node (12) is according to claim 11.

13. A network (10) according to claim 12, **characterised in that** each destination node (14) includes means for sending to the sender node (12) a request for changing group and **in that** the sender node (12) comprises means for reassigning of the destination node (14) from an original group to a destination group in accordance with the request to change groups.

## FIG.1

Destinataire

Relai

## FIG.2

$G_1$            $G_2$

0                  Tmin(1-2)                   Tmax   t

*N* retours pendant Tmin 1-2       *L* retour pendant Tmax-Tmin 1-2

## FIG.3

122

Message à envoyer

Estimation

120 — Vacance

116

114    Non

52

Identification
*Estimation tps AR*

MAJ tps
AR

Changement
groupe ?    Oui

BD

112

118

état      Type ?    acquittement

108

110

Réception —106

100— Répartition

32A

32

32B

## FIG.4

émission          émission

102         104

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2009141631 A

**Littérature non-brevet citée dans la description**

• TCP with gateway adaptive pacing for multihop wireless networks with Internet connectivity. **EL-RAKABAWY et al.** COMPUTER NETWORKS. ELSEVIER